# EUROPEAN PATENT APPLICATION

(11) **EP 4 697 735 A1**
(43) Date of publication of application: **18.02.2026**
(21) Application number: 25737104.7
(22) Date of filing: 04.07.2025
(51) Int. Cl.: H04N 23/57, H04N 23/55, H04N 23/51, G03B 30/00, H04M 1/02, H05K 5/02

(54) **CAMERA STRUCTURE AND ELECTRONIC DEVICE INCLUDING CAMERA STRUCTURE**

(30) Priority: 04.07.2024 KR 20240088307; 29.10.2024 KR 20240149687
(71) Applicant: Samsung Electronics Co., Ltd, Suwon-si, Gyeonggi-do 16677 (KR)
(72) Inventor: LEE, Sangtae, Suwon-si, Gyeonggi-do 16677 (KR); PARK, Eunsoo, Suwon-si, Gyeonggi-do 16677 (KR); CHO, Yonglak, Suwon-si, Gyeonggi-do 16677 (KR)
(74) Representative: HGF
(86) International application number: PCT/KR2025/009610
(87) International publication number: WO 2026/010427

(57) **Abstract**

According to an embodiment of the disclosure, an electronic device may include a housing. The electronic device may include a camera module disposed in the housing and including a lens assembly including at least one lens. The electronic device may include a printed circuit board electrically connected to the camera module. The electronic device may include a cover housing forming at least a portion of the exterior of the electronic device and including a first opening corresponding to at least a portion of the lens assembly. The electronic device may include a first cover member that includes a first portion at least partially facing the cover housing, a second portion extending from the first portion and at least partially protruding through the first opening, and a second opening formed in the second portion. The electronic device may include a second cover member covering the second portion of the first cover member and at least a part of the cover housing. At least a part of the first cover member and at least a part of the second cover member may be in contact with each other so as to enable electrical connection. Various other embodiments may be provided.

## Description

### [Technical Field]

Various embodiments disclosed in this document relate to a camera structure and an electronic device including the camera structure.

### [Background Art]

The electronic device may be equipped with various types of cameras. The electronic device may include a plurality of cameras to enable shooting under various shooting conditions (e.g., focal length and angle of view). For example, the electronic device may include cameras for a standard angle, a wide-angle, and a zoom angle, respectively, depending on the angle of view.

These cameras may be protected by a cover member. At least a portion of the cover member may be exposed to the outside of the electronic device, thereby forming a part of the exterior of the electronic device. The cameras may be protected from the external environment by being covered by the cover member.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

A camera included in a portable electronic device is required to have a high level of performance. In order to improve the camera performance, the number of lenses accommodated in the image sensor and the lens assembly of the camera (e.g., a plurality of lenses and a lens barrel that accommodates the lenses) and/or the sizes of the lenses may be increased. In this case, the size of the cover member that protects the lens assembly from the external environment may also be increased. At least a portion of the cover member may be accommodated in an opening formed in a cover housing (e.g., a back cover or a rear cover) forming the exterior of the electronic device. The cover member may surround a part of the camera module, and may be exposed to the outside of the electronic device through the opening formed in the cover housing to form a part of the exterior of the electronic device.

Meanwhile, the size of the opening formed in the cover housing may be determined according to the size of the cover member. The opening of the cover housing may be expanded as the size of the cover member increases. As the size of the opening of the cover housing increases, the width of portions of the cover housing located in an area adjacent to the opening may decrease. Therefore, the durability (e.g., strength or hardness) of the cover housing may be degraded.

The technical subjects pursued in the disclosure may not be limited to the above-mentioned technical subjects, and other technical subjects which are not mentioned may be clearly understood, through the following descriptions, by those skilled in the art to which the disclosure pertains.

### [Solution to Problem]

According to an embodiment of the disclosure, an electronic device may include a housing. The electronic device may include a camera module disposed in the housing and including a lens assembly including at least one lens. The electronic device may include a printed circuit board electrically connected to the camera module. The electronic device may include a cover housing forming at least a portion of the exterior of the electronic device and including a first opening corresponding to at least a portion of the lens assembly. The electronic device may include a first cover member that includes a first portion at least partially facing the cover housing, a second portion extending from the first portion and at least partially protruding through the first opening, and a second opening formed in the second portion. The electronic device may include a second cover member covering the second portion of the first cover member and at least a part of the cover housing. At least a part of the first cover member and at least a part of the second cover member may be in contact with each other so as to enable electrical connection.

According to an embodiment of the disclosure, an electronic device may include a housing. The electronic device may include a camera module disposed in the housing and including a lens assembly including at least one lens. The electronic device may include a cover housing forming at least a portion of the exterior of the electronic device and including a first opening corresponding to at least a portion of the lens assembly. The electronic device may include a first cover member that includes a first portion at least partially facing the cover housing, a second portion extending from the first portion and at least partially protruding through the first opening, and a second opening formed in the second portion. The electronic device may include a second cover member including a third opening corresponding to the second opening and disposed in the second portion of the first cover member. The electronic device may include a support member disposed between the first cover member and the second cover member, including a fourth opening that at least partially corresponds to the second opening and accommodates at least a portion of the lens assembly, and configured to be at least partially covered by the second cover member.

According to an embodiment of the disclosure, an electronic device may comprise: a housing; a camera module disposed in the housing and including a lens assembly, the lens assembly including at least one lens; a printed circuit board electrically connected to the camera module;
a cover housing forming at least a portion of the exterior of the electronic device, the cover housing including a first opening corresponding to at least a portion of the lens assembly; a first cover member comprising a first portion at least partially facing the cover housing, a second portion extending from the first portion and at least partially protruding through the first opening, and a second opening formed in the second portion; and a second cover member covering at least a part of the second portion of the first cover member and at least a part of the cover housing, wherein at least a part of the first cover member and at least a part of the second cover member may be in contact with each other so as to enable electrical connection.

According to an embodiment of the disclosure, an electronic device may comprise: a housing;
a camera module disposed in the housing and including a lens assembly, the lens assembly including at least one lens; a cover housing forming at least a portion of the exterior of the electronic device, the cover housing including a first opening corresponding to at least a portion of the lens assembly; a first cover member comprising a first portion at least partially facing the cover housing, a second portion extending from the first portion and at least partially protruding through the first opening, and a second opening formed in the second portion; and a second cover member comprising a third opening corresponding to the second opening, wherein the second cover member is disposed in the second portion of the first cover member; and a support member disposed between the first cover member and the second cover member, the support member comprising a fourth opening at least partially corresponding to the second opening and accommodating at least a portion of the lens assembly, wherein the support member is configured to be at least partially covered by the second cover member.

### [Advantageous Effects of Invention]

According to various embodiments disclosed in this document, the cover member protecting the lens assembly may be configured to be separated into a portion (e.g., a second cover member) exposed to the outside of the electronic device and a portion (e.g., a first cover member) at least partially disposed inside the electronic device, instead of being configured as a single shape. The first cover member and the second cover member may be configured separately to be formed to have different sizes. For example, a portion of the first cover member accommodated in the opening of the cover housing may be formed to have a smaller size than the second cover member when the cover housing is viewed from above. As the size of the portion of the first cover member is reduced, the size of the opening of the cover housing may also be reduced. Therefore, as the size of the opening of the cover housing is reduced, the durability of the cover housing may be improved.

In addition, since the first cover member and the second cover member are formed separately, when the second cover member is damaged, only the second cover member may be replaced. Since the second cover member is disposed outside the cover housing, the cover housing may not need to be removed in the process of replacing the second cover member. Therefore, the ease of repair of the electronic device may be increased.

In addition, the first cover member and the second cover member may be electrically connected through the conductive member. The second cover member may be electrically connected to a printed circuit board disposed inside the electronic device through a separate conductive member. Therefore, the electric charge accumulated in the first cover member and the second cover member may be conducted to the ground of the printed circuit board through the first cover member, the second cover member, and the conductive members.

Advantageous effects obtainable from the disclosure may not be limited to the above - mentioned effects, and other effects which are not mentioned may be clearly understood from the following descriptions by those skilled in the art to which the disclosure pertains.

### [Brief Description of Drawings]

With regard to the description of the drawings, the same or like reference signs may be used to designate the same or like elements.
FIG. 1A is a perspective view of an electronic device in a flat state (or unfolded state) according to various embodiments of the disclosure.
FIG. 1B is a plan view illustrating a front side of an electronic device in an unfolded state according to various embodiments of the disclosure.
FIG. 1C is a plan view illustrating a rear side of an electronic device in an unfolding state according to various embodiments of the disclosure.
FIG. 2A is a perspective view of an electronic device in a folded state according to various embodiments of the disclosure.
FIG. 2B is a perspective view of an electronic device in an intermediate state according to various embodiments of the disclosure.
FIG. 3 is an assembly diagram of a cover housing, a first cover member, a second cover member, and a camera window disposed on a rear surface of a first housing according to an embodiment of the disclosure.
FIG. 4A is a perspective view of a first cover member according to various embodiments of the disclosure.
FIG. 4B is a perspective view of a second cover member according to various embodiments of the disclosure.
FIGS. 5A to 5C are cross-sectional views taken along line A-A in FIG. 1C according to various embodiments.
FIG. 6 is a cross-sectional view taken along line A-A in FIG. 1C according to various embodiments, which is a drawing illustrating an embodiment in which a support member is disposed between a first cover member and a second cover member.

### [Mode for the Invention]

Hereinafter, embodiments of the disclosure will be described in detail with reference to the drawings so that those skilled in the art to which the disclosure pertains can easily implement the disclosure. However, the disclosure may be implemented in various forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

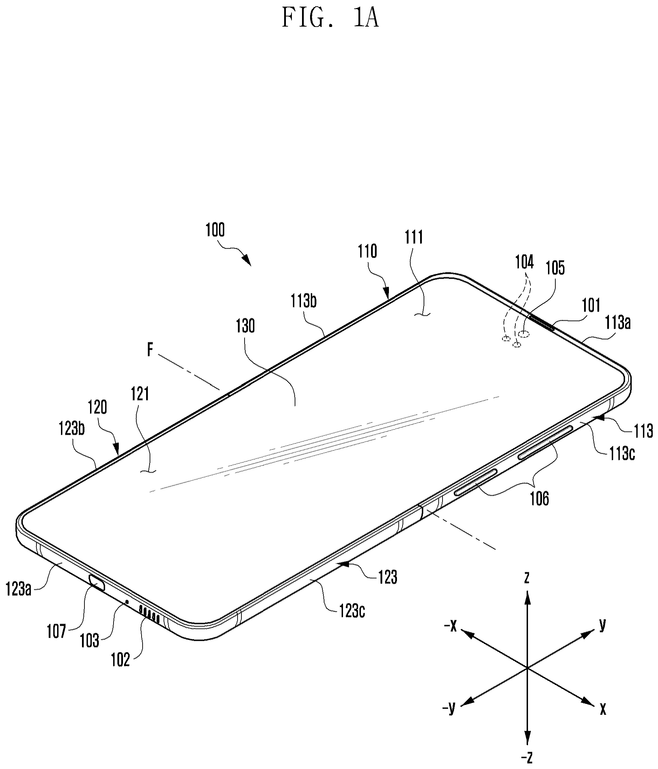

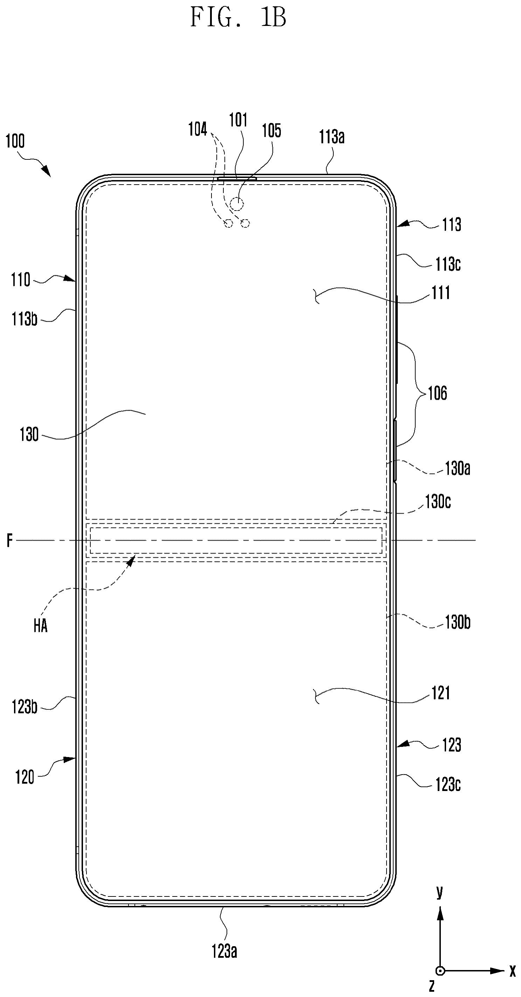

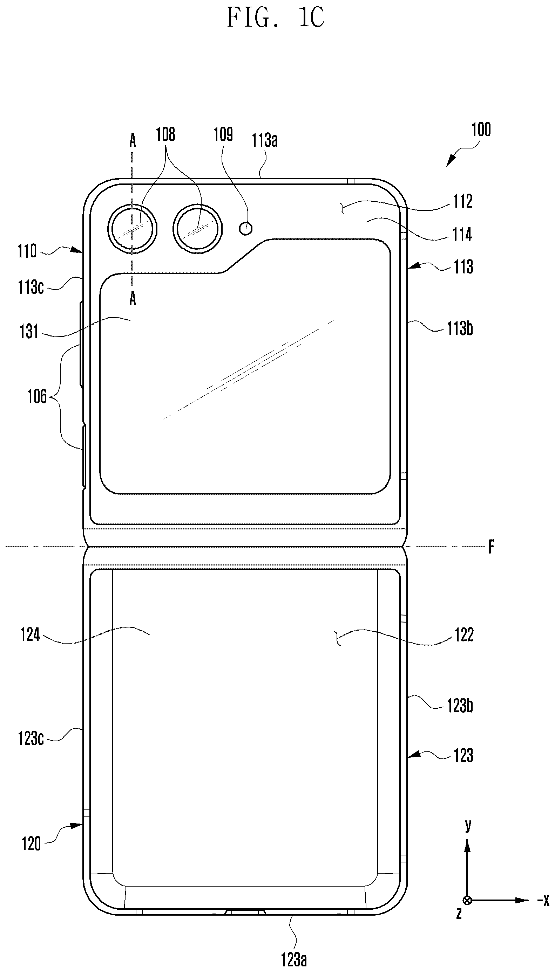

FIG. 1A is a perspective view illustrating a front side of an electronic device in a flat state (or unfolded state) according to various embodiments of the disclosure. FIG. 1B is a plan view illustrating a front side of an electronic device in an unfolded state according to various embodiments of the disclosure. FIG. 1C is a plan view illustrating a rear side of an electronic device in an unfolding state according to various embodiments of the disclosure.

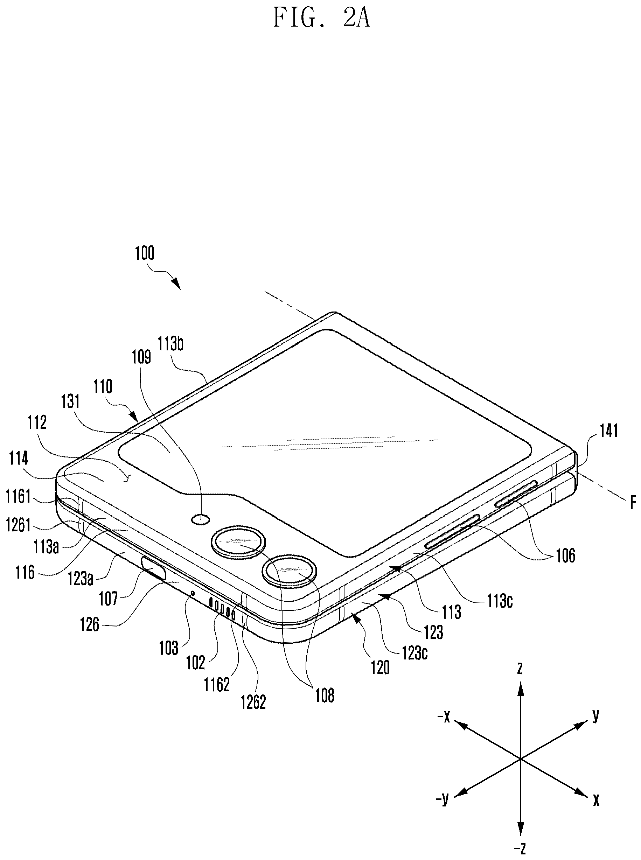

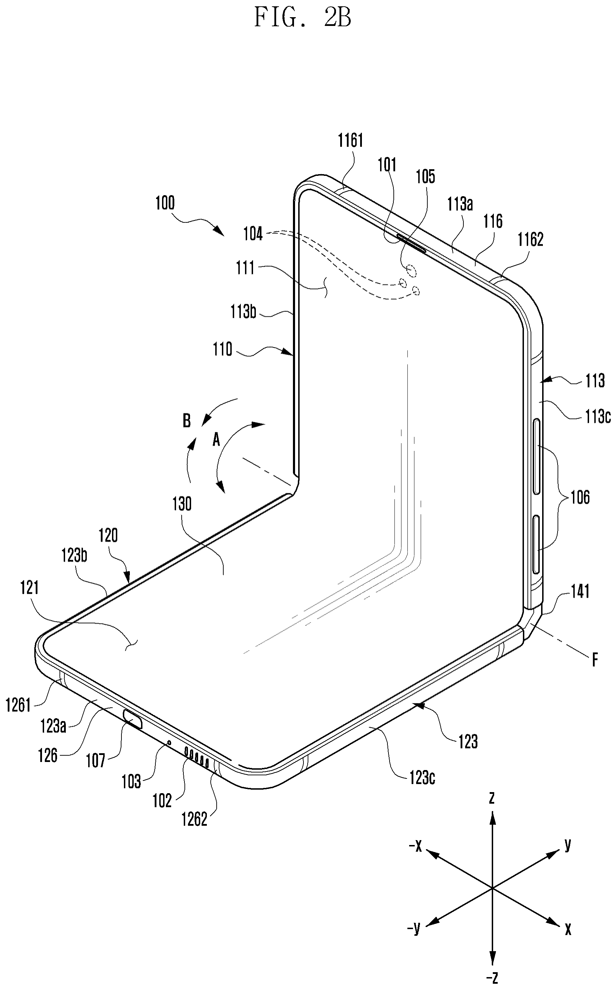

FIG. 2A is a perspective view of an electronic device in a folded state according to various embodiments of the disclosure. FIG. 2B is a perspective view of an electronic device in an intermediate state according to various embodiments of the disclosure.

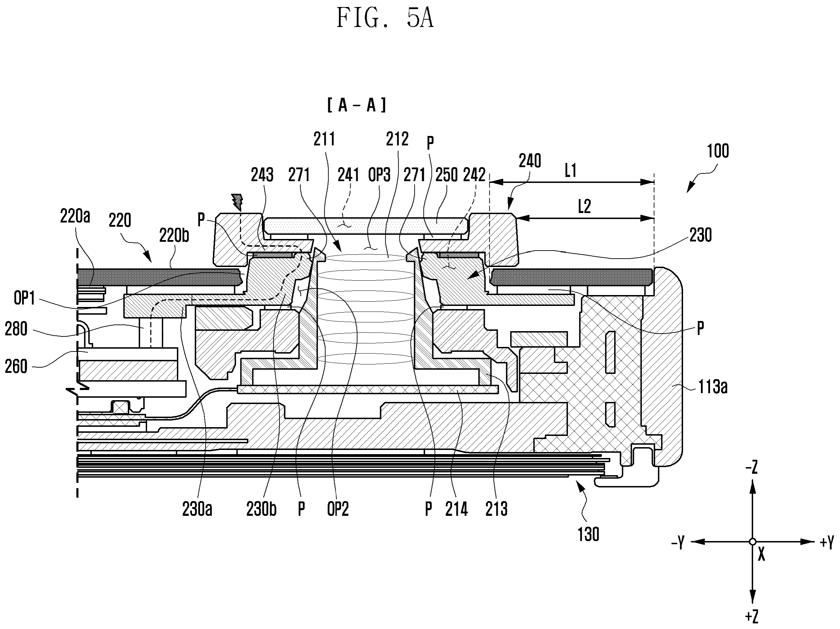

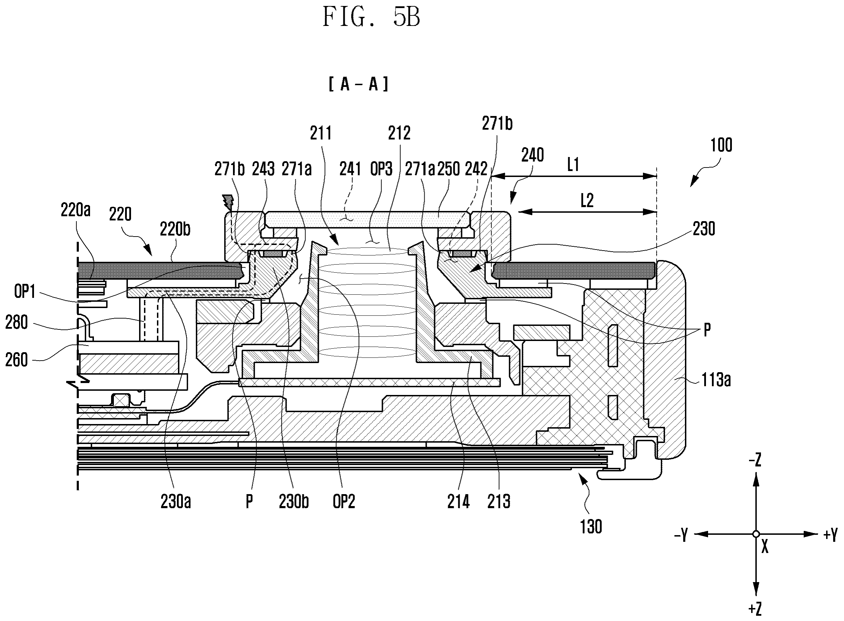

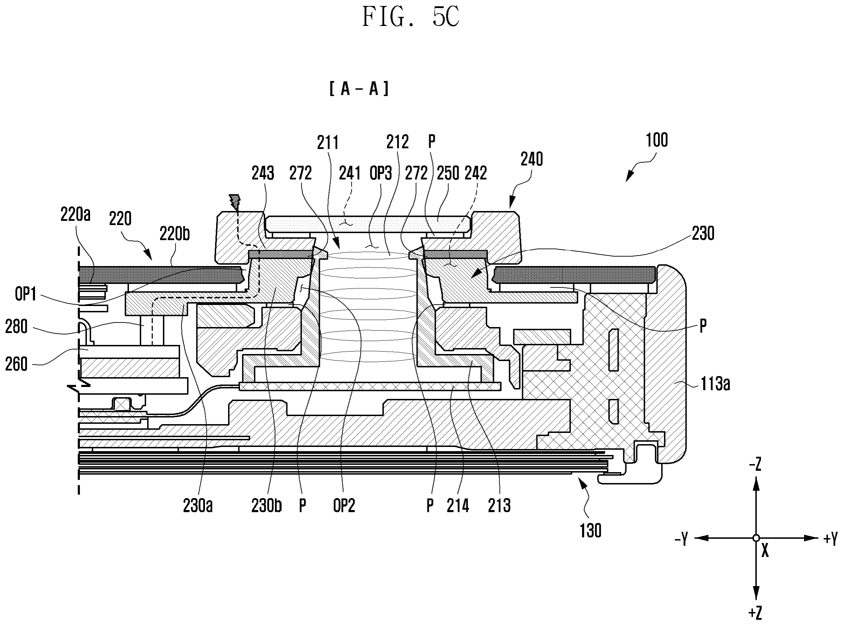

Referring to FIGS. 1A to 2B, an electronic device 100 (e.g., a foldable electronic device) may include a first housing 110 (e.g., a first housing part or a first housing structure) and a second housing 120 (e.g., a second housing part or a second housing structure) that are coupled to each other so as to be foldable around a hinge device (e.g., the hinge assembly HA in FIG. 1B) (e.g., the hinge assembly HA in FIG. 5) (e.g., a hinge module or a hinge structure). In an embodiment, the first housing 110, the second housing 120, and the hinge device (e.g., the hinge assembly HA in FIG. 1B) may include a foldable housing (e.g., a housing, a foldable housing structure, or a housing structure). In an embodiment, the hinge device (e.g., the hinge assembly HA in FIG. 1B) may be disposed in the x-axis direction or y-axis direction. In an embodiment, the electronic device 100 may include a first display 130 (e.g., a flexible display, a foldable display, or a main display) disposed in an area (e.g., a recess) formed by the first housing 110 and the second housing 120. In an embodiment, the first housing 110 and the second housing 120 may be disposed on both sides of a folding axis F, and may have a substantially symmetrical shape with respect to the folding axis F. In an embodiment, the angle or distance between the first housing 110 and the second housing 120 may vary depending on the state of the electronic device 100. For example, the angle or distance between the first housing 110 and the second housing 120 may vary depending on whether the electronic device is in an unfolded state (or flat state), a folded state, or an intermediate state.

According to various embodiments, the first housing 110 may include a first surface 111 facing a first direction (e.g., front direction) (z-axis direction) and a second surface 112 facing a second direction (e.g., back direction) (-z-axis direction) opposite to the first surface 111 in the unfolded state of the electronic device 100. In an embodiment, the second housing 120 may include a third surface 121 facing a first direction (z-axis direction) and a fourth surface 122 facing a second direction (-z-axis direction) in the unfolded state of the electronic device 100. In an embodiment, the first surface 111 of the first housing 110 and the third surface 121 of the second housing 120 may face substantially the same direction, i.e., the first direction (z-axis direction) in the unfolded state of the electronic device 100. In an embodiment, the first surface 111 of the first housing 110 and the third surface 121 of the second housing 120 may face each other in the folded state of the electronic device 100. In an embodiment, the second surface 112 of the first housing 110 and the fourth surface 122 of the second housing 120 may face substantially the same direction, i.e., the second direction (-z-axis direction) in the unfolded state of the electronic device 100. In an embodiment, the second surface 112 of the first housing and the fourth surface 122 of the second housing 120 may face in the opposite directions to each other in the folded state of the electronic device 100. For example, in the folded state of the electronic device 100, the second surface 112 may face the first direction (z-axis direction) and the fourth surface 122 may face the second direction (-z-axis direction). In this case, the first display 130 may not be visible from the outside (in-folding type). In an embodiment, the electronic device 100 may be folded so that the second surface 112 of the first housing 110 and the fourth surface 122 of the second housing 120 face each other. In this case, the first display 130 may be disposed so as to be visible from the outside (out-folding type).

According to various embodiments, the first housing 110 (e.g., the first housing structure) may include a first side member 113 forming at least a portion of an exterior of the electronic device 100, and a first rear cover 114 that is coupled to the first side member 113 and forms at least a portion of the second surface 112 of the electronic device 100. In an embodiment, the first side member 113 may include a first side surface 113a, a second side surface 113b that extends from one end of the first side surface 113a, and a third side surface 113c that extends from the other end of the first side surface 113a. In an embodiment, the first side member 113 may be formed into a quadrangular (e.g., square or rectangular) shape through the first side surface 113a, the second side surface 113b, and the third side surface 113c.

According to various embodiments, the second housing 120 (e.g., the second housing structure) may include a second side member 123 forming at least a portion of the exterior of the electronic device 100, and a second rear cover 124 that is coupled to the second side member 123 and forms at least a portion of the fourth surface 122 of the electronic device 100. In an embodiment, the second side member 123 may include a fourth side surface 123a, a fifth side surface 123b extending from one end of the fourth side surface 123a, and a sixth side surface 123c extending from the other end of the fourth side surface 123a. In an embodiment, the second side member 123 may be formed into a quadrangular shape through the fourth side surface 123a, the fifth side surface 123b, and the sixth side surface 123c.

According to various embodiments, the first and second housings 110, 120 are not limited to the illustrated shapes and coupling, and may be implemented by combinations and/or coupling of other shapes or parts. In an embodiment, the first side member 113 may be formed integrally with the first rear cover 114, and the second side member 123 may be formed integrally with the second rear cover 124.

According to various embodiments, in the unfolded state of the electronic device 100, the second side surface 113b of the first side member 113 and the fifth side surface 123b of the second side member 123 may be connected without a gap. In an embodiment, in the unfolded state of the electronic device 100, the third side surface 113c of the first side member 113 and the sixth side surface 123c of the second side member 123 may be connected without a gap. In an embodiment, in the unfolded state of the electronic device 100, the sum of the lengths of the second side surface 113b and fifth side surface 123b may be configured to be longer than the lengths of the first side surface 113a and/or the fourth side surface 123a. In an embodiment, in the unfolded state of the electronic device 100, the sum of the lengths of the third side surface 113c and sixth side surface 123c may be configured to be longer than the lengths of the first side surface 113a and/or the fourth side surface 123a.

Referring to FIGS. 2A and 2B, the first side member 113 and/or the second side member 123 may be formed of metal or may further include a polymer that is injected into the metal. In an embodiment, the first side member 113 and/or the second side member 123 may include at least one conductive portion 116 and/or 126 electrically segmented through one or more segments 1161 and 1162 and/or 1261 and 1262 formed of a polymer. In this case, at least one conductive portion 116 and/or 126 may be electrically connected to a wireless communication circuit included in the electronic device 100, and may be used as at least a part of an antenna that operates in at least one designated band (e.g., a legacy band or a new radio (NR) band).

According to various embodiments, the first rear cover 114 and/or the second rear cover 124 may be formed of at least one of, for example, coated or tinted glass, ceramic, polymer, or metal (e.g., aluminum, stainless steel (STS), or magnesium), or a combination of at least two thereof.

According to various embodiments, the first display 130 may be disposed to extend from the first surface 111 of the first housing 110 across the hinge device (e.g., the hinge assembly HA in FIG. 1B) to at least a portion of the third surface 121 of the second housing 120. In an embodiment, the first display 130 may include a first area 130a substantially corresponding to the first surface 111, a second area 130b substantially corresponding to the second surface 112, and a third area 130c (e.g., a folding area or a bendable area) connecting the first area 130a and the second area 130b. In an embodiment, the third area 130c may be a portion of the first area 130a and/or the second area 130b and may be disposed at a position corresponding to the hinge device (e.g., the hinge assembly HA in FIG. 1B). In an embodiment, the electronic device 100 may include a hinge housing 141 (e.g., a hinge cover) that supports the hinge device (e.g., the hinge assembly HA in FIG. 1B). In an embodiment, the hinge housing 141 may be disposed so that at least a portion thereof is visually exposed to the outside when the electronic device 100 is in the folded state and so that it is received inside the inner space of the first housing 110 and the inner space of the second housing 120 when the electronic device 100 is in the unfolded state, thereby being invisible from the outside.

According to various embodiments, the electronic device 100 may include a second display 131 (e.g., a sub-display) that is disposed separately from the first display 130. In an embodiment, the second display 131 may be disposed on the second surface 112 of the first housing 110 so as to be visually exposed, at least in part. In an embodiment, when the electronic device 100 is in the folded state, the second display 131 may display at least some of the state information of the electronic device 100 by replacing at least some of the display functions of the first display 130. In an embodiment, the second display 131 may be disposed so as to be visible from the outside through at least a portion of the first rear cover 114. In an embodiment, the second display 131 may also be disposed on the fourth surface 122 of the second housing 120. In this case, the second display 131 may be disposed to be visible from the outside through at least a portion of the second rear cover 124.

According to various embodiments, the electronic device 100 may include at least one of an input device 103 (e.g., a microphone), audio output devices 101 and 102, a sensor module 104, camera devices 105 and 108, a key input device 106, or a connector port 107. In the illustrated embodiment, although the input device 103 (e.g., a microphone), the audio output devices 101 and 102, the sensor module 104, the camera devices 105 and 108, the key input device 106, or the connector port 107 is illustrated as a hole or a circular element in the first housing 110 or the second housing 120, this is an example for explanation, and the disclosure is not limited thereto. According to various embodiments, the input device 103 may include at least one microphone 103 disposed in the second housing 120. In an embodiment, the input device 103 may include a plurality of microphones 103 disposed so as to detect the direction of sound. In an embodiment, the plurality of microphones 103 may be disposed at appropriate locations in the first housing 110 and/or the second housing 120. In an embodiment, the audio output device 101 and 102 may include one or more speakers 101 and 102. In an embodiment, the one or more speakers 101 and 102 may include a call receiver 101 disposed in the first housing 110 and a speaker 102 disposed in the second housing 120. In an embodiment, the input device 103, the audio output devices 101 and 102, and the connector port 107 may be disposed in a space provided in the first housing 110 and/or the second housing 120 of the electronic device 100, and may be exposed to the external environment through at least one hole formed in the first housing 110 and/or the second housing 120. In an embodiment, at least one connector port 107 may be used to transmit and receive power and/or data to and from an external electronic device. In an embodiment, at least one connector port (e.g., an ear jack hole) may also accommodate a connector (e.g., an ear jack) for transmitting and receiving audio signals to and from an external electronic device. In an embodiment, the holes formed in the first housing 110 and/or the second housing 120 may be used in common for the input device 103 and the audio output devices 101 and 102. In an embodiment, the audio output devices 101 and 102 may include a speaker (e.g., a piezo speaker) that is not exposed through the hole formed in the first housing 110 and/or the second housing 120.

According to various embodiments, the sensor module 104 may generate an electric signal or a data value corresponding to an internal operating state of the electronic device 100 or an external environmental state. In an embodiment, the sensor module 104 may detect an external environment through the first surface 111 of the first housing 110. In an embodiment, the electronic device 100 may further include at least one sensor module disposed to detect an external environment through the second surface 112 of the first housing 110. In an embodiment, the sensor module 104 (e.g., an illuminance sensor) may be disposed under the first display 130 so as to detect an external environment through the first display 130. In an embodiment, the sensor module 104 may include at least one of a gesture sensor, a gyro sensor, an atmosphere pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor 104.

According to various embodiments, the camera devices 105 and 108 may include a first camera device 105 (e.g., a front camera device) disposed on the first surface 111 of the first housing 110 and a second camera device 108 disposed on the second surface 112 of the first housing 110. In an embodiment, the electronic device 100 may further include a flash 109 disposed near the second camera device 108. In an embodiment, the camera devices 105 and 108 may include at least one lens, an image sensor, and/or an image signal processor. In an embodiment, the camera devices 105 and 108 may be configured such that two or more lenses (e.g., a wide-angle lens, an ultra-wide-angle lens, or a telephoto lens) and two or more image sensors are disposed on one side (e.g., the first surface 111, the second surface 112, the third surface 121, or the fourth surface 122) of the electronic device 100. In an embodiment, the camera devices 105 and 108 may also include lenses and/or image sensors for time of flight (TOF).

According to various embodiments, the key input device 106 (e.g., a key button) may be disposed on the third surface 113c of the first side member 113 of the first housing 110. In an embodiment, the key input device 106 may be disposed on at least one of other surfaces 113a and 113b of the first housing 110 and/or the surfaces 123a, 123b, and 123c of the second housing 120. In an embodiment, the electronic device 100 may exclude some or all of the key input devices 106, and the excluded key input device 106 may be implemented in another form, such as a soft key, on the first display 130. In an embodiment, the key input device 106 may be implemented using a pressure sensor included in the first display 130.

According to various embodiments, some of the camera devices 105 and 108 (e.g., the first camera device 105) or the sensor module 104 may be disposed to be visually exposed through the first display 130. In an embodiment, the first camera device 105 or the sensor module 104 may be disposed in the inner space of the electronic device 100 so as to be optically exposed to the outside through an opening (e.g., a through-hole) at least partially formed in the first display 130. In an embodiment, at least a portion of the sensor module 104 may be disposed in the inner space of the electronic device 100 so as not to be visually exposed through the first display 130. Referring to FIG. 2B, the electronic device 100 may operate to maintain at least one designated folding angle through the hinge device (e.g., the hinge assembly HA in FIG. 1B) in the intermediate state. For example, the electronic device 100 may control the first display 130 to display content differently in a display area corresponding to the first surface 111 and a display area corresponding to the third surface 121. In an embodiment, the electronic device 100 may operate to enter a substantially unfolded state (e.g., the unfolded state in FIG. 1A) and/or a substantially folded state (e.g., the folded state in FIG. 2A), based on a predetermined folding angle (e.g., the angle between the first housing 110 and the second housing 120 when the electronic device 100 is in the intermediate state) through the hinge device (e.g., the hinge assembly HA in FIG. 1B). In an embodiment, when a pressing force is applied in a direction (the direction A) in which the electronic device 100 is to be unfolded, the electronic device 100 may operate to switch from an unfolded state at a predetermined folding angle to an unfolded state (e.g., the unfolded state in FIG. 1A) through the hinge device (e.g., the hinge assembly HA in FIG. 1B). In an embodiment, when a pressing force is applied in a direction (the direction B) in which the electronic device 100 is to be folded, the electronic device 100 may operate to switch from an unfolded state at a predetermined folding angle to a folded state (e.g., the folded state in FIG. 2A) through the hinge device (e.g., the hinge assembly HA in FIG. 1B). In an embodiment, the electronic device 100 may operate to maintain an unfolded state (not shown) at various folding angles through the hinge device (e.g., the hinge assembly HA in FIG. 1B) (free stop function).

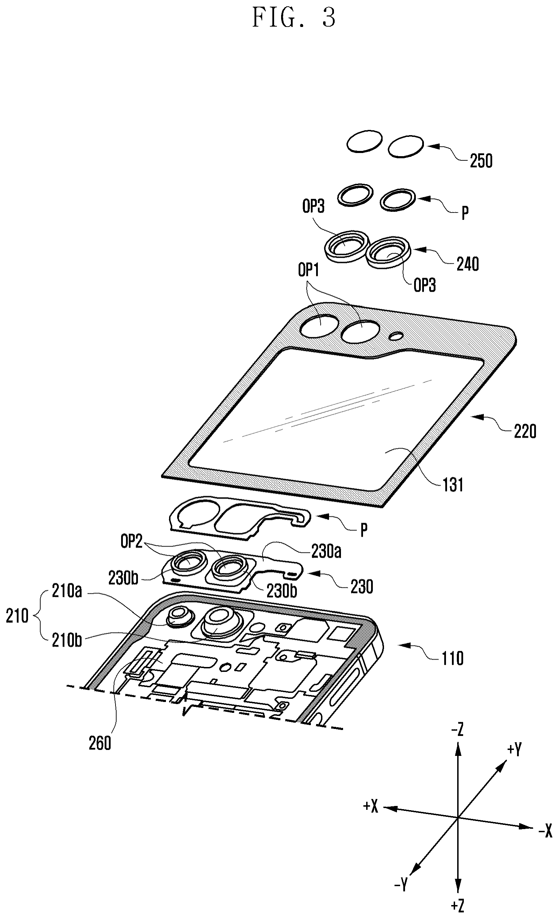

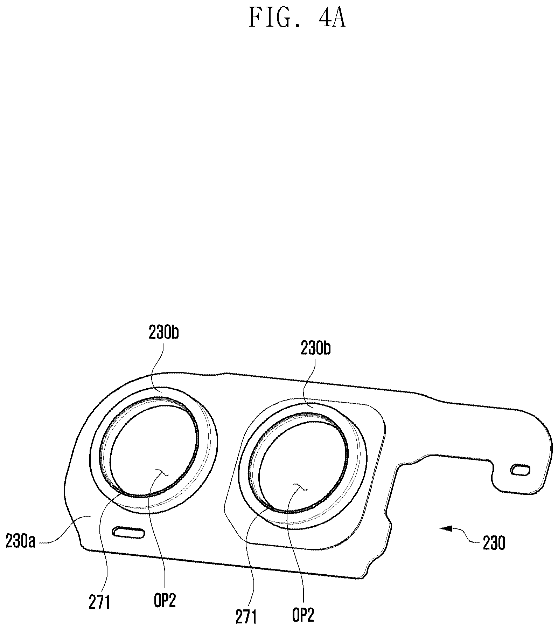

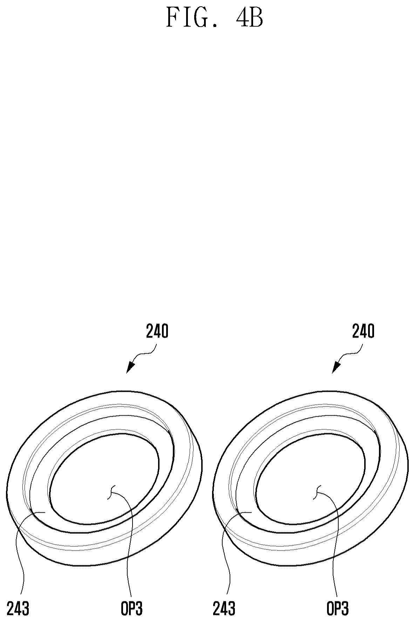

FIG. 3 is an assembly diagram of a cover housing, a first cover member, a second cover member, and a camera window disposed on a rear surface of a first housing according to an embodiment of the disclosure. FIG. 4A is a perspective view of a first cover member according to various embodiments of the disclosure. FIG. 4B is a perspective view of a second cover member according to various embodiments of the disclosure.

According to various embodiments, as illustrated in FIG. 3, a camera module 210 (e.g., the second camera device 108 in FIG. 1B), a cover housing 220 (e.g., the first rear cover 114 in FIG. 1C), a first cover member 230 (e.g., a first camera cover member, a first cover, or an inner cover), a second cover member 240 (e.g., a second camera cover member, a second cover, or an outer cover), and/or a camera window 250, which are disposed in the first housing 110, may be disposed on the rear surface (e.g., the second surface 112 in FIG. 1C) of the electronic device 100. However, the disclosure is not limited thereto, and the a camera module 210, cover housing 220, first cover member 230, second cover member 240, and/or camera window 250 may be disposed on a surface other than the rear surface of the electronic device 100. In an embodiment, as illustrated in FIG. 3 and FIGS. 5A to 5C to be described below, the electronic device 100 may be configured such that the camera module 210, the first cover member 230, the cover housing 220, the second cover member 240, and the camera window 250 are sequentially stacked.

According to various embodiments, as illustrated in FIG. 3, the camera module 210 may include a first camera 210a and a second camera 210b. However, the number of cameras in the camera module 210 may not be limited to two. In an embodiment, the camera module 210 may include a single camera, or may further include another camera (e.g., a third camera) in addition to the first camera 210a and the second camera 210b described above. Hereinafter, a description will be made on the assumption that the camera module 210 includes a first camera 210a and a second camera 210b.

According to various embodiments, the camera module 210 may include a first camera 210a and a second camera 210b. The first camera 210a and the second camera 210b may include an image sensor (e.g., the image sensor 214 of the first camera 210a in FIG. 5A) that converts light reflected from an object into an electric signal, respectively. The image sensor 214 may be a sensor such as a charge coupled device (CCD) or a complementary metal oxide semiconductor (CMOS). The first camera 210a and the second camera 210b included in the camera module 210 may be cameras that are different types or perform different functions. In an embodiment, the first camera 210a and the second camera 210b may include different lens assemblies from each other. The lens assembly (e.g., the first lens assembly 211 of the first camera 210a in FIG. 5A) may include at least one lens (e.g., the lens 212 in FIG. 5A) and a lens barrel (e.g., a barrel) (e.g., the lens barrel 213 in FIG. 5A) in which the at least one lens is disposed. In an embodiment, the first lens assembly 211 of the first camera 210a and the second lens assembly (not shown) of the second camera 210b may include lenses having different optical properties (e.g., angle of view, focal length, autofocus, f-number, or optical zoom). For example, the first camera 210a may capture an image with a first angle of view, and the second camera 210b may capture an image with a second angle of view. In an embodiment, the first angle of view and the second angle of view may be angles of view that are typically classified as wide angles, standard angles, and zoom angles in the camera field.

According to various embodiments, the first camera 210a may include a first camera housing (not shown) in which the first lens assembly 211 is disposed and in which an image sensor 214 connected to a printed circuit board 260 is accommodated. The second camera 210b may include a second camera housing (not shown) that accommodates an image sensor (not shown) connected to a printed circuit board 260 on which the second lens assembly (e.g., the first lens assembly 211) is disposed. In an embodiment, the second lens assembly may be identical to or similar to the first lens assembly 211 illustrated in FIG. 5A.

According to various embodiments, the cover housing 220 (e.g., the first rear cover 114 in FIG. 1B) may constitute at least a portion of a surface (for example the second surface 112) of the electronic device 100 and may constitute at least a portion of the exterior of the electronic device 100. In an embodiment, the cover housing 220 may include a plurality of first openings OP1 respectively corresponding to the first camera 210a and the second camera 210b of the camera module 210. In an embodiment, the number of the first openings OP1 of the cover housing 220 may be determined according to the number of cameras of the camera module 210. In an embodiment, the plurality of first openings OP1 of the cover housing 220 may correspond to at least a portion of the first lens assembly 211 of the first camera 210a and at least a portion of the second lens assembly of the second camera 210b, respectively. For example, the plurality of first openings OP1 of the cover housing 220 may correspond to the lens 212 disposed in the first lens assembly 211 and the lens disposed in the second lens assembly, respectively. For example, the plurality of first openings OP1 of the cover housing 220 may be aligned with the respective optical axes of the first camera 210a and the second camera 210b.

According to various embodiments, as illustrated in FIG. 3, the first cover member 230 may be disposed on the rear surface of the first housing 110 so as to at least partially cover the first camera 210a and the second camera 210b included in the camera module 210. For example, the first cover member 230 may be disposed on the rear surface of the first housing 110 so as to substantially cover the first camera 210a and the second camera 210b included in the camera module 210. In an embodiment, the camera module 210 may be covered at least partially by the first cover member 230, thereby securing durability (e.g., hardness and strength) against external impact. In an embodiment, the first cover member 230 may be at least partially covered by the cover housing 220 while being disposed inside the first housing 110. 'Covering' may be defined with respect to the z-axis (which may be the axis parallel to the optical axis of the first camera 210a and/or the second camera 210b). That is, the first cover member 230 may at least partially cover the camera module 210, and the cover housing 220 may at least partially cover the first cover member 230 when viewed in the +Z direction in FIG. 3 (or when viewed along the optical axis towards the first camera 210a and/or the second camera 210b).

In an embodiment, referring to FIGS. 3 and 4A, the first cover member 230 may include a first portion 230a disposed substantially parallel to the cover housing 220 and a second portion 230b protruding from the first portion 230a in a direction (e.g., the -Z direction in FIG. 3) toward the rear surface of the electronic device 100. In an embodiment, the second portion 230b may include a second opening OP2 that accommodates at least a portion of the lens assemblies (e.g., the first lens assembly 211 in FIG. 5A) of the first camera 210a and the second camera 210b. In an embodiment, the second portion 230b of the first cover member 230 may be accommodated at least in part in the first opening OP1 of the cover housing 220. In an embodiment, the size of the first opening OP1 of the cover housing 220 may be determined by the size of the second portion 230b of the first cover member 230. In an embodiment, at least a portion of the second portion 230b of the first cover member 230 may be exposed to the outside of the electronic device 100 through the first opening OP1 of the cover housing 220 (although it will be understood that the exposed portion of the of the second portion 230b of the first cover member 230 may ultimately be covered by the second cover member 240, as will be described below). In an embodiment, referring to FIG. 5A to described below, the size of the first opening OP1 of the cover housing 220 may be configured to be greater than the second opening OP2 of the first cover member 230 so as to accommodate the second portion 230b of the first cover member 230.

According to various embodiments, as illustrated in FIG. 3, the second cover member 240 may be disposed in the cover housing 220 to accommodate at least a portion of the first cover member 230. In an embodiment, the second cover member 240 may be disposed on an outer surface of the cover housing 220 (e.g., the second surface 220b of the cover housing 220) to form at least a portion of the exterior of the electronic device 100. In an embodiment, as illustrated in FIG. 5A to be described below, when viewed from the side of the electronic device 100 (e.g., when viewed in the X-axis direction in FIG. 5A) or when viewed from above the cover housing 220 (e.g., when viewed in the +Z direction in FIG. 5A), the size of the second cover member 240 may be greater than the size of the first cover member 230. Therefore, a portion (e.g., the second portion 230b) of the first cover member 230 may be accommodated in (and/or covered by) the second cover member 240 when viewed from above the cover housing 220.

According to various embodiments, as illustrated in FIGS. 3 and 4B, the second cover member 240 may include a third opening OP3 corresponding to the second opening OP2 of the first cover member 230. In an embodiment, referring to FIG. 5A to be described below, when viewed from the side of the electronic device 100 (e.g., when viewed in the X-axis direction in FIG. 5A) or when viewed from above the cover housing 220 (e.g., when viewed in the +Z direction in FIG. 5A), the size of the third opening OP3 may be greater than the size of the second opening OP2. In an embodiment, since the second cover member 240 is configured to be disposed on the outer surface of the cover housing 220 (e.g., the second surface of the cover housing 220), the third opening OP3 may be formed to be smaller than the first opening OP1 of the cover housing 220. However, the comparison of sizes of the first opening OP1, second opening OP2, and third opening OP3 described above is an example, and the sizes of the first opening OP1, second opening OP2, and third opening OP3 may be variously modified.

According to various embodiments, the camera window 250 may be disposed in a seating portion 243 of the second cover member 240. In an embodiment, the camera window may be formed, at least in part, of a material having high light transmittance (for example, to allow light to reach the lenses of the lens assembly). For example, the camera window 250 may be formed of substantially transparent glass or synthetic resin. The camera window 250 may block external foreign substances from entering the camera module 210. Since the camera window 250 may be exposed to the external environment, it may be formed of a material having good durability (e.g., hardness, strength, or corrosion resistance). In an embodiment, the camera window 250 may include a material that may improve the optical characteristics of the camera module 210. This material may be placed on the surface of the camera window 250 by coating or printing.

According to various embodiments, the first cover member 230 and the second cover member 240 may be formed of a material having a certain level of durability so as to protect the camera module 210 (e.g., the first camera 210a and the second camera 210b) facing the second surface (e.g., the second surface 112 in FIG. 1C) of the electronic device 100. For example, the first cover member 230 and the second cover member 240 may include metal such as aluminum, stainless steel (STS or SUS), iron, magnesium, or titanium. In an embodiment, the first cover member 230 and the second cover member 240 may be formed of a conductive material (e.g., metal) to form a discharge path (e.g., electrostatic discharge (ESD) path) that conducts electric charge accumulated outside the electronic device 100 or electric charge accumulated around the first cover member 230 and/or the second cover member 240 inside the electronic device 100 to the ground. As described below, the first cover member 230 and the second cover member 240 may be electrically connected. For example, at least part of the first cover member 230 and at least part of the second cover member 240 may be in contact with each other so as to enable an electrical connection. For example, the first cover member 230 and the second cover member 240 may be electrically connected through first conductive members 271 and/or 272 (e.g., a conductive tape 272 and/or a protruding structure 271). The first cover member 230 may be electrically connected to the printed circuit board 260, which is connected to the ground, through the second conductive member 280. Accordingly, the electronic device 100 may include a discharge path formed by the ground of the printed circuit board 260 - the second conductive member 280 - the first cover member 230 - the first conductive members 271 and 272 - the second cover member 240. The electric charge accumulated around the second cover member 240 outside the electronic device 100 or the electric charge accumulated around the first cover member 230 and the second cover member 240 inside the electronic device 100 may be conducted from the second cover member 240 to the ground of the printed circuit board 260 through the first cover member 230.

According to various embodiments, as illustrated in FIG. 5A to be described below, the first cover member 230 and the second cover member 240 may be in contact through a protruding structure 271 formed on the first cover member 230. In an embodiment, the protruding structure 271 may be a portion from which a coating layer (e.g., an insulating layer including an insulating material) coated on the first cover member 230 is removed. Therefore, the second cover member 240 may come into contact with the protruding structure 271 of the first cover member 230 and may be electrically connected to the printed circuit board 260 that is electrically connected to the first cover member 230 through the second conductive member 280.

FIGS. 5A to 5C are cross-sectional views taken along line A-A in FIG. 1C according to various embodiments.

Hereinafter, the arrangement relationship of the first camera 210a of the camera module 210, the first cover member 230, the second cover member 240, and the cover housing 220 will be described. For example, the following description may relate to the arrangement structure of the first cover member 230, the second cover member 240, and the first lens assembly 211. However, the following description may be applied to the arrangement structure of the first cover member 230, the second cover member 240, and the second lens assembly of the second camera 210b in the same manner.

According to various embodiments, as illustrated in FIGS. 5A, 5B, and 5C, the electronic device 100 may be configured such that the first lens assembly 211 of the first camera 210a, the first cover member 230, the cover housing 220, the second cover member 240, and the camera window 250 are stacked in sequence. In an embodiment, at least a portion of the first lens assembly 211 may be disposed below the first cover member 230 (e.g., in the +Z direction in FIG. 5A, or along the optical axis of the first lens assembly 211). In an embodiment, the lens 212 of the first lens assembly 211, the second opening OP2 of the first cover member 230, the third opening OP3 of the second cover member 240, and the window may be aligned along the Z-axis direction in FIG. 5A (or along a direction parallel to the optical axis of the first lens assembly 211). In an embodiment, the first lens assembly 211 may be accommodated at least partially in the second opening OP2 of the first cover member 230. In some embodiments, the first lens assembly 211 may be accommodated at least partially in the second opening OP2 of the first cover member 230 and the third opening OP3 of the second cover member 240. In an embodiment, at least a portion of an outermost lens 212 that is disposed on the lens barrel 213 and faces the camera window 250, among the plurality of lenses 212 of the first lens assembly 211, may be positioned in the second opening OP2 of the first cover member 230 and/or the third opening OP3 of the second cover member 240.

According to various embodiments, the first cover member 230 may be disposed on the rear surface (e.g., the second surface 112 in FIG. 1B) of the first housing 110 so as to substantially cover the first camera 210a and the second camera 210b included in the camera module 210. In an embodiment, referring to FIG. 5A, FIG. 5B, and FIG. 5C, the first cover member 230 may include a first portion 230a that is disposed substantially parallel to the cover housing 220 and a second portion 230b that protrudes from the first portion 230a in a direction (e.g., the -Z direction in FIG. 3) toward the rear surface 112 of the electronic device 100. In an embodiment, the first portion 230a of the first cover member 230 may face at least the portion of the printed circuit board 260 disposed in the first housing 110. For example, the first portion 230a of the first cover member 230 may be disposed between the printed circuit board 260 and the cover housing 220, and at least a portion thereof may be adhered to the first surface 220a of the cover housing 220 through an adhesive member P. In an embodiment, the first cover member 230 may be disposed between the printed circuit board 260 and the first cover member 230 and may be electrically connected to the printed circuit board 260, for example through the second conductive member 280 including a conductive material. In an embodiment, the second conductive member 280 may include a conductive clip and a gasket, and in addition, the second conductive member 280 may include various contact members formed of a conductive material and being in contact with the first cover member 230 and the printed circuit board 260.

According to various embodiments, as illustrated in FIGS. 5A, 5B, and 5C, the second cover member 240 may cover an area of the second portion 230b of the first cover member 230 that is exposed (or would otherwise be exposed) to the outside of the cover housing 220 through the first opening OP1 of the cover housing 220. In an embodiment, as shown in FIGS. 5A to 5C, when viewed from the side of the electronic device 100 (e.g., in the X-axis direction in FIG. 5A) or when viewed from above the cover housing 220 (e.g., when viewed in the +Z direction in FIG. 5A), the size of the second cover member 240 may be greater than the size of the first cover member 230. Therefore, when the cover housing 220 is viewed from above (for example, along the optical axis of the first lens assembly 211 towards the first lens assembly 211), a portion (e.g., the second portion 230b) of the first cover member 230 may be covered by the second cover member 240.

According to various embodiments, as illustrated in FIGS. 5A to 5C, since the second cover member 240 is formed to have a size greater than the second portion 230b of the first cover member 230, the distance L2 between one end of the second cover member 240 and the first side surface 113a of the electronic device 100 may be less than the distance L1 from the first side surface 113a to the first opening OP1 in which the second portion 230b of the first cover member 230 is accommodated.

According to various embodiments, as illustrated in FIGS. 5A to 5C, the second cover member 240 may include a first recess 241, a second recess 242 disposed below the first recess 241 (e.g., in the +Z direction in FIG. 5A), and a seating portion 243 partitioning the first recess 241 and the second recess 242. In an embodiment, the size of the second recess 242 may be greater than the size of the first recess 241. In some embodiments, the size of the second recess 242 may be smaller than the size of the first recess 241. In an embodiment, the third opening OP3 of the second cover member 240 may be formed in the seating portion 243. In an embodiment, the first recess 241 of the second cover member 240 may accommodate the camera window 250. In an embodiment, the camera window 250 may be at least partially accommodated in the first recess 241 of the second cover member 240 and adhered to the seating portion 243 of the second cover member 240 through an adhesive member P. In an embodiment, at least a portion of the second portion 230b of the first cover member 230 may be accommodated in the second recess 242 of the second cover member 240. In an embodiment, the first cover member 230 and the second cover member 240 may be adhered to each other through an adhesive member P disposed between the second portion 230b of the first cover member 230 and the seating portion 243 of the second cover member 240.

According to various embodiments, as illustrated in FIGS. 5A, 5B, and 5C, the first cover member 230 and the second cover member 240 may be electrically connected through the first conductive members 271 and/or 272.

In an embodiment, referring to FIGS. 5A and 5B, the first conductive member 271 or 272 may be a protruding structure 271 (e.g., a protrusion) formed by protruding from one of one surface of the second portion 230b of the first cover member 230 and the seating portion 243 of the second cover member 240 toward the other of the second portion 230b of the first cover member 230 and the seating portion 243 of the second cover member 240. In an embodiment, the protruding structure 271 may protrude from the second portion 230b of the first cover member 230 toward the second cover member 240 and may be formed along the periphery of the second opening OP2 of the first cover member 230 so as to come into contact with a portion (e.g., the seating portion 243) of the second cover member 240. In some embodiments, the protruding structure 271 may protrude from a portion (e.g., the seating portion 243) of the second cover member 240 toward the first cover member 240 and may be formed along the periphery of the third opening OP3 of the second cover member 240 so as to come into contact with the second portion 230b of the first cover member 230. However, although the protruding structure 271 protruding from the first cover member 230 is described as being in contact with the seating portion 243 of the second cover member 240 above, it may not be limited thereto. For example, the protruding structure 271 may come into contact with a portion other than the seating portion 243 of the second cover member 240, thereby electrically connecting the first cover member 230 and the second cover member 240.

In an embodiment, referring to FIG. 5B, the protruding structure 271 may include a plurality of protruding structures 271a and 271b protruding from the second portion 230b of the first cover member 230 or a portion (e.g., the seating portion 243) of the second cover member 240. For example, the protruding structure 271 may include a first protruding structure 271a and a second protruding structure 271b. In an embodiment, the first protruding structure 271a and the second protruding structure 271b may be formed along the periphery of the second opening OP2 of the first cover member 230 and/or the third opening OP3 of the second cover member 240. In an embodiment, the second protruding structure 271b may be disposed outside the first protruding structure 271a.

In an embodiment, referring to FIG. 5B, the first protruding structure 271a and the second protruding structure 271b may protrude from the second portion 230b of the first cover member 230, may be formed along the periphery of the second opening OP2 of the first cover member 230, and may be in contact with a portion (e.g., the seating portion 243) of the second cover member 240. In some embodiments, the first protruding structure 271a and the second protruding structure 271b may protrude from a portion (e.g., the seating portion 243) of the second cover member 240, may be formed along the third opening OP3 of the second cover member 240, and may be in contact with the second portion 230b of the first cover member 230. In an embodiment, one of the first protruding structure 271a and the second protruding structure 271b may be formed to protrude from the second portion 230b of the first cover member 230, and the other of the first protruding structure 271a and the second protruding structure 271b may be formed to protrude from the seating portion 243 of the second cover member 240. Although the above description has been made on the assumption that the first conductive members 271 and 272 include two protruding structures (e.g., the first protruding structure 271a and the second protruding structure 271b), they may not be limited thereto. The number of protruding structures 271 constituting the first conductive members may be modified in various ways.

In an embodiment, referring to FIG. 5B, the first cover member 230 and the second cover member 240 may be bonded through an adhesive member P. In an embodiment, the adhesive member P may be disposed between the first protruding structure 271a and the second protruding structure 271b between the second portion 230b of the first cover member 230 and a portion (e.g., the seating portion 243) of the second cover member 240.

In an embodiment, as described with reference to FIG. 4A above, the protruding structure 271 formed on the first cover member 230 may be a portion from which a coating layer (e.g., an insulating layer including an insulating material) coated on the first cover member 230 is removed. In an embodiment, the second cover member 240 may be configured such that a coating layer (e.g., an insulating layer) is removed from the portion that is in contact with the protruding structure 271 of the first cover member 230 or a coating layer is not applied to the entire area. On the other hand, the protruding structure 271 may protrude from the second cover member 240 toward the second portion 230b of the first cover member 230. In an embodiment, the first cover member 230 may be configured such that a coating layer is removed from the portion that is in contact with the protruding structure 271 of the second cover member 240.

In an embodiment, referring to FIG. 5C, the first conductive member may be a conductive tape 272 including a conductive material (e.g., copper, aluminum, and/or nickel). In an embodiment, the conductive tape 272 may be disposed between the second portion 230b of the first cover member 230 and a portion (e.g., the seating portion 243) of the second cover member 240 to couple the first cover member 230 and the second cover member 240 while electrically connecting the first cover member 230 and the second cover member 240.

In an embodiment, the conductive tape 272 may include a plurality of conductive tapes. For example, the conductive tape 272 may include a first conductive tape and at least one second conductive tape disposed outside the first conductive tape. In an embodiment, at least one functional member (e.g., a waterproofing member) may be disposed between the first conductive tape and the second conductive tape.

As the size of the first opening OP1 of the cover housing 220 increases, the durability of the area adjacent to the first opening OP1 decreases, and thus it may be more likely to be damaged when an external impact is applied. According to an embodiment of the disclosure, in order to reduce the size of the first opening OP1 of the cover housing 220, the cover member protecting the first lens assembly 211 may be configured to be separated as a portion (e.g., the second cover member 240) that is exposed to the outside of the electronic device 100 and a portion (e.g., the first cover member 230) that is at least partially disposed inside the electronic device 100, instead of being configured as a single shape. Referring to FIGS. 5A to 5C, only the second portion 230b of the first cover member 230 may be accommodated in the first opening OP1 of the cover housing 220. Therefore, the size of the first opening OP1 of the cover housing 220 may be determined according to the size of the second portion 230b of the first cover member 230. The second cover member 240 forming the exterior of the electronic device 100 and the first cover member 230 accommodated in the second cover member 240, which are formed to be separated, may have different sizes. For example, when the cover housing 220 is viewed from above, the second cover member 240 is formed to be larger than the first cover member 230 so as to accommodate the first cover member 230. Therefore, by reducing the size of the second portion 230b of the first cover member 230 that is not exposed to the outside of the electronic device 100, the size of the first opening OP1 formed in the cover housing 220 may be reduced. Accordingly, as the size of the first opening OP1 is reduced, the durability of the cover housing 220 may be improved.

According to an embodiment of the disclosure, since the first cover member 230 and the second cover member 240 are formed separately, when the second cover member 240 is damaged, only the second cover member 240 needs to be replaced, thereby increasing the ease of repair, compared to a comparative embodiment in which the first cover member 230 and the second cover member 240 are formed integrally. In addition, according to the disclosure, since the cover housing 220 is not required to be removed to replace the second cover member 240, the second display 131 adjacent to the cover housing 220 and the waterproof structure disposed between the cover housing 220 and the first housing may be prevented from being damaged.

According to an embodiment of the disclosure, as illustrated in FIGS. 5A, 5B, and 5C,
the first cover member 230 and the second cover member 240 may be electrically connected through the first conductive member (e.g., the conductive tape 272 and/or protrusion). The first cover member 230 may be electrically connected to the printed circuit board 260, connected to the ground, through the second conductive member 280. Therefore, the electronic device 100 may include a discharge path formed by the ground of the printed circuit board 260 - the first cover member 230 - the second cover member 240. Electric charges accumulated around the second cover member 240 outside the electronic device 100 or electric charges accumulated around the first cover member 230 and the second cover member 240 inside the electronic device 100 may be conducted to the ground of the printed circuit board 260 through the second cover member 240 and the first cover member 230.

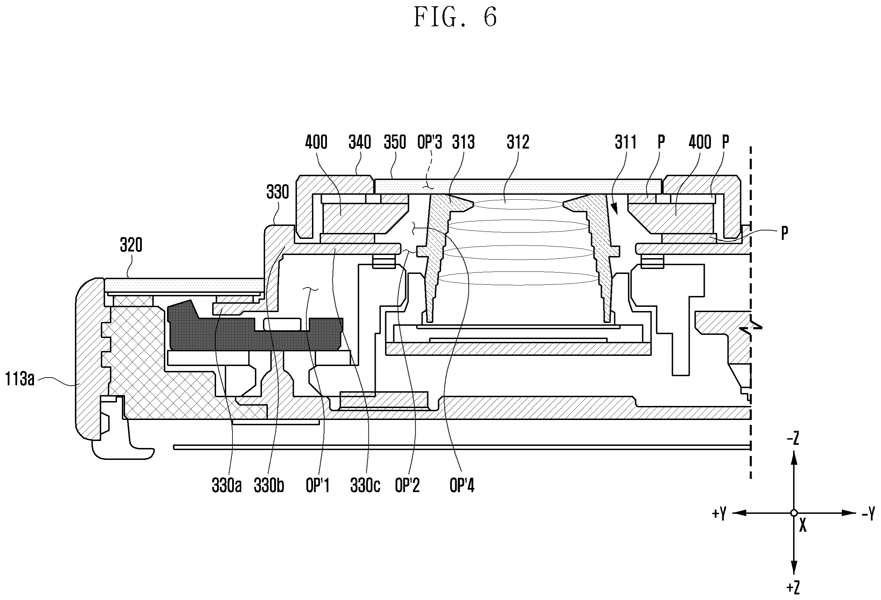

FIG. 6 is a cross-sectional view taken along line A-A in FIG. 1C according to various embodiments, which is a drawing illustrating an embodiment in which a support member is disposed between the first cover member and the second cover member.

The following description relates to an embodiment in which a first lens assembly 311 (e.g., the first lens assembly 211 in FIG. 5A) of the camera module 210 (e.g., the second camera device 108 in FIG. 1C) is disposed to protrude from a first opening OP'1 of a cover housing 320 (e.g., the cover housing 220 in FIG. 3). In this case, a first cover member 330 and a second cover member 340 protecting the lens assembly 311 may be at least partially disposed outside the cover housing 320 to form a portion of the exterior of the electronic device 100.

According to various embodiments, as illustrated in FIG. 6, the first cover member 330 may include a first portion 330a disposed substantially parallel to the cover housing 320 forming a second surface 112 (e.g., the second surface 112 in FIG. 1C) of the electronic device 100 and a second portion 330b protruding from the first portion 330a in a direction (e.g., the - Z direction in FIG. 6) toward the second surface 112 of the electronic device 100. In an embodiment, the first portion 330a of the first cover member 330 may be adhered to the first surface 320a of the cover housing 320 through an adhesive member P. In an embodiment, at least a portion of the second portion 330b of the first cover member 330 may protrude from the first opening OP'1 of the cover housing 320. In an embodiment, the second portion 330b may include a second opening OP'2 in which at least a portion of the lens assembly 311 is accommodated.

According to various embodiments, as illustrated in FIG. 6, the second portion 330b of the first cover member 330 may include s seating portion 330c substantially parallel to the cover housing 320. In an embodiment, the second cover member 340 may be disposed on the seating portion 330c of the first cover member 330. The second cover member 340 may include a third opening OP'3 in which a camera window 350 is disposed.

According to various embodiments, as illustrated in FIG. 6, a support member 400 may be disposed between the seating portion 330c of the first cover member 330 and the second cover member 340. In an embodiment, the support member 400 may be coupled to the seating portion 330c of the first cover member 330 and the second cover member 340, respectively, through an adhesive member P. In other words, the first cover member 330 and the second cover member 340 may be coupled by the support member 400 and the adhesive member P. In an embodiment, the camera window may be adhered to the support member 400 by the adhesive member P.

The support member 400 may support the second cover member 340 from the first cover member 330. In an embodiment, the support member 400 may support the second cover member 340 when an external impact is applied to the electronic device 100, thereby preventing damage to the second cover member 340.

According to various embodiments, as illustrated in FIG. 6, the support member 400 may include a fourth opening OP'4 that accommodates at least a portion of the lens assembly 311. In an embodiment, the first lens assembly 311 may be at least partially accommodated in the second opening OP'2 of the first cover member 330 and/or the fourth opening OP'4 of the support member 400, so that the lens 313 may face the camera window 350.

In a comparative embodiment, the first cover member 330 and the second cover member 340 may be formed integrally, and in this case, the space where the support member 400 in FIG. 6 is disposed may be filled with a member (e.g., metal) for physically connecting the first cover member 330 and the second cover member 340. According to an embodiment of the disclosure, as shown in FIG. 6, since the support member 400 is disposed between the first cover member 330 and the second cover member 340, the ratio of a weight of the first cover member 330 and the second cover member 340 to that of the electronic device may be reduced, compared to the comparative embodiment. Therefore, the electronic device 100 may be made relatively lighter compared to the comparative embodiment. For example, in a comparative embodiment, the support member 400 and the second cover member 340 may be formed integrally and may be made of metal. According to an embodiment of the disclosure, as shown in FIG. 6, since the support member 400 is formed as a separate component (for example formed by injection molding), the support member may be made from a lighter material (for example plastic) to reduce the weight of the electronic device 100 compared to the comparative embodiment in which the space where the support member 400 in FIG. 6 is disposed is occupied by a heavier portion of the second cover member 340.

According to various embodiments, although the electronic device 100 has been described as being a foldable electronic device, it may not be limited thereto. The above description regarding the first cover member (e.g., the first cover member 230 in FIG. 3 and/or the first cover member 330 in FIG. 6) and the second cover member (e.g., the second cover member 240 in FIG. 3 and/or the second cover member 340 in FIG. 6) protecting the camera module may be equally applied to an electronic device having a bar-type or plate-type exterior, a slidable electronic device, a stretchable electronic device, and/or a rollable electronic device. The term "slidable electronic device", "stretchable electronic device", and/or "rollable electronic device" may refer to an electronic device in which the display (e.g., the first display 130 in FIG. 1A) is capable of bending deformation such that at least a portion is folded, wound or rolled, expanded in area, and/or received inside a housing. The slidable electronic device, the stretchable electronic device, and/or the rollable electronic device may be used by expanding the screen display area by unfolding the display or exposing the wider area of the display to the outside according to the user's needs.

An electronic device 100 according to an embodiment (for example, a first example embodiment) of the disclosure may include a housing 110 or 120. The electronic device may include a camera module 210 disposed in the housing and including a lens assembly 211 including at least one lens 212. The electronic device may include a printed circuit board 260 electrically connected to the camera module. The electronic device may include a cover housing 220 forming at least a portion of the exterior of the electronic device and including a first opening OP1 corresponding to at least a portion of the lens assembly. The electronic device may include a first cover member 230 that includes a first portion 230a at least partially facing the cover housing, a second portion 230b extending from the first portion and at least partially protruding through the first opening, and a second opening OP2 formed in the second portion. The electronic device may include a second cover member 240 covering the second portion of the first cover member and at least a part of the cover housing. At least a part of the first cover member and at least a part of the second cover member may be in contact with each other so as to enable electrical connection.

In an embodiment the electronic device may further include a protruding structure 271 disposed between the second portion of the first cover member and the second cover member and formed to protrude from one of the second portion of the first cover member and the second cover member toward the other of the second portion of the first cover member and the second cover member.

In an embodiment (, the electronic device may further include a conductive member 280 disposed between the printed circuit board and the first portion of the first cover member so as to be in contact with the printed circuit board and the first portion of the first cover member.

In an embodiment, in the electronic device, the size of the second cover member may be greater larger than the size of the second portion of the first cover member when viewed from above the cover housing.

In an embodiment, the protruding structure may be formed to protrude from the second portion of the first cover member toward the second cover member. The first cover member may include an insulating layer coated on at least a portion of the remaining area, excluding the protruding structure.

In an embodiment, the protruding structure may be formed along the periphery of the second opening.

In an embodiment, the protruding structure may include a first protruding structure 271a and at least one second protruding structure 271b disposed outside the first protruding structure.

In an embodiment, the electronic device may further include a conductive tape 272 that is disposed between the second portion of the first cover member and the second cover member, includes a conductive material, and is disposed along the periphery of the second opening.

In an embodiment, the second cover member may include a first recess 241, a second recess 242 located below the first recess, and a seating portion 243 partitioning the first recess from the second recess and having a third opening OP3 formed therein to at least partially correspond to the second opening. At least a portion of the second portion of the first cover member may be accommodated in the second recess. The protruding structure may be disposed between the seating portion and the second portion of the first cover member.

In an embodiment, the electronic device may further include an adhesive member P disposed between the seating portion and the second portion of the first cover member.

In an embodiment, the size of the second recess may be greater than the size of the first recess.

In an embodiment, the electronic device may further include a camera window 250 accommodated in the first recess of the second cover member and adhered to the seating portion.

In an embodiment, the first portion of the first cover member may be disposed between the printed circuit board and the cover housing and adhered to a first surface 220a of the cover housing. The second cover member may face a second surface 220b of the cover housing exposed to the outside of the electronic device.

In an embodiment, at least a portion of the lens assembly may be accommodated in the second opening of the first cover member.

In an embodiment, the outermost lens adjacent to the cover housing, among the lenses, may be disposed in the second opening and/or the third opening.

In an embodiment, the flow of electric charges may be induced from the second cover member to the printed circuit board through the protruding structure and the conductive member.

In an embodiment, the first cover member and the second cover member may include a conductive material.

According to an embodiment of the disclosure, an electronic device 100 may include a housing 110 or 120. The electronic device may include a camera module 210 disposed in the housing and including a lens assembly 211 including at least one lens 212. The electronic device may include a cover housing 320 forming at least a portion of the exterior of the electronic device and including a first opening OP'1 corresponding to at least a portion of the lens assembly. The electronic device may include a first cover member 330 that includes a first portion 330a at least partially facing the cover housing, a second portion 330b extending from the first portion and at least partially protruding through the first opening, and a second opening OP'2 formed in the second portion. The electronic device may include a second cover member 340 including a third opening OP'3 corresponding to the second opening and disposed in the second portion of the first cover member. The electronic device may include a support member 400 disposed between the first cover member and the second cover member, including a fourth opening OP'4 that at least partially corresponds to the second opening and accommodates at least a portion of the lens assembly, and configured to be at least partially covered by the second cover member.

In an embodiment, the size of the second cover member may be less than the size of the second portion of the first cover member when viewed from above the cover housing.

In an embodiment, the second portion of the first cover member may include a seating portion 330c that is substantially parallel to the cover housing. The second cover member may be disposed on the seating portion 330c.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

It will be understood that the disclosure considers and includes embodiments based on a combination of two or more of the embodiments disclosed above and embodiments including any combination of the features described above, in addition to the embodiments disclosed above. That is, the absence of an explicit indication that two features may be combined or that two embodiments may be combined does not mean that such a combination is not considered, but should be construed to encompass such a combination.

In a first example, there is provided an electronic device comprising: a housing; a camera module disposed in the housing and including a lens assembly, the lens assembly including at least one lens; a printed circuit board electrically connected to the camera module; a cover housing forming at least a portion of the exterior of the electronic device, the cover housing including a first opening corresponding to at least a portion of the lens assembly; a first cover member comprising a first portion at least partially facing the cover housing, a second portion extending from the first portion and at least partially protruding through the first opening, and a second opening formed in the second portion; and a second cover member covering at least a part of the second portion of the first cover member and at least a part of the cover housing, wherein at least a part of the first cover member and at least a part of the second cover member are in contact with each other so as to enable electrical connection.

In a second example there is provided the electronic device according to the first example, further comprising a protruding structure disposed between the second portion of the first cover member and the second cover member and formed by protruding from one of the second portion of the first cover member and the second cover member toward the other of the second portion of the first cover member and the second cover member.

In a third example there is provided the electronic device according to the second example, further comprising a conductive member disposed between the printed circuit board and the first portion of the first cover member so as to be in contact with the printed circuit board and the first portion of the first cover member such that the second cover member is electrically connected to the printed circuit board through the protruding structure and the conductive member.

In a fourth example there is provided the electronic device according to the second or third example, wherein the protruding structure is formed by protruding from the second portion of the first cover member toward the second cover member, and wherein the first cover member includes an insulating layer coated on at least a portion of the area other than the protruding structure.

In a fifth example there is provided the electronic device according to any one of the second to fourth examples, wherein the protruding structure is formed along the periphery of the second opening.

In a sixth example there is provided the electronic device according to the fifth example, wherein the protruding structure includes a first protruding structure and at least one second protruding structure disposed outside the first protruding structure.

In a seventh example there is provided the electronic device according to any one of the second to sixth examples, wherein the second cover member includes a first recess, a second recess located below the first recess, and a seating portion partitioning the first recess from the second recess, the seating portion having a third opening formed therein at least partially corresponding to the second opening, and wherein at least a portion of the second portion of the first cover member is accommodated in the second recess, and wherein the protruding structure is disposed between the seating portion and the second portion of the first cover member.

In an eighth example, there is provided the electronic device according the seventh example, further comprising an adhesive member disposed between the seating portion and the second portion of the first cover member.

In a ninth example there is provided the electronic device according to the seventh or eighth example, wherein the size of the second recess is larger than the size of the first recess.

In a tenth example, there is provided the electronic device according to any one of the seventh to ninth examples, further comprising a camera window accommodated in the first recess of the second cover member and adhered to the seating portion.

In an eleventh example there is provided the electronic device according to any one of the seventh to tenth examples, wherein the outermost lens adjacent to the cover housing among the lenses is disposed in at least one of the second opening and the third opening.

In a twelfth example there is provided the electronic device according to any one of the first to eleventh examples, wherein the first portion of the first cover member is disposed between the printed circuit board and the cover housing and adhered to a first surface of the cover housing, and wherein the second cover member faces a second surface of the cover housing exposed to the outside of the electronic device.

In a thirteenth example there is provided the electronic device according to any of the first to twelfth examples, wherein at least a portion of the lens assembly is accommodated in the second opening of the first cover member.

In a fourteenth example there is provided the electronic device according to any of the first to thirteenth examples, wherein the size of the second cover member is larger than the size of the second portion of the first cover member when viewed from above the cover housing.

In a fifteenth example there is provided the electronic device according to any of the first to fourteenth examples, further comprising a conductive tape disposed between the second portion of the first cover member and the second cover member, the conductive tape including a conductive material and disposed along the periphery of the second opening.

In a sixteenth example there is provided the electronic device according to any of the first to fifteenth examples, wherein the first cover member and the second cover member comprise a conductive material.

In a seventeenth example there is provided an electronic device comprising: a housing; a camera module disposed in the housing and including a lens assembly, the lens assembly including at least one lens; a cover housing forming at least a portion of the exterior of the electronic device, the cover housing including a first opening corresponding to at least a portion of the lens assembly; a first cover member comprising a first portion at least partially facing the cover housing, a second portion extending from the first portion and at least partially protruding through the first opening, and a second opening formed in the second portion; and a second cover member comprising a third opening corresponding to the second opening, wherein the second cover member is disposed in the second portion of the first cover member; and a support member disposed between the first cover member and the second cover member, the support member comprising a fourth opening at least partially corresponding to the second opening and accommodating at least a portion of the lens assembly, wherein the support member is configured to be at least partially covered by the second cover member.

In an eighteenth example there is provided the electronic device according to the seventeenth example, wherein the size of the second cover member is less than the size of the second portion of the first cover member when viewed from above the cover housing.

In a nineteenth example there is provided the electronic device according to the seventeenth or eighteenth example, wherein the second portion of the first cover member comprises a seating portion that is substantially parallel to the cover housing, and wherein the second cover member is disposed on the seating portion.

## Claims

1. An electronic device (100) comprising:
a housing (110 or 120);
a camera module (210) disposed in the housing and including a lens assembly (211), the lens assembly including at least one lens (212);
a printed circuit board (260) electrically connected to the camera module;
a cover housing (220) forming at least a portion of the exterior of the electronic device, the cover housing including a first opening (OP1) corresponding to at least a portion of the lens assembly;
a first cover member (230) comprising a first portion (230a) at least partially facing the cover housing, a second portion (230b) extending from the first portion and at least partially protruding through the first opening, and a second opening (OP2) formed in the second portion; and
a second cover member (240) covering at least a part of the second portion of the first cover member and at least a part of the cover housing,
wherein at least a part of the first cover member and at least a part of the second cover member are in contact with each other so as to enable electrical connection.

2. The electronic device according to claim 1, further comprising a protruding structure (271) disposed between the second portion of the first cover member and the second cover member and formed by protruding from one of the second portion of the first cover member and the second cover member toward the other of the second portion of the first cover member and the second cover member.

3. The electronic device according to claim 2, further comprising a conductive member (280) disposed between the printed circuit board and the first portion of the first cover member so as to be in contact with the printed circuit board and the first portion of the first cover member.

4. The electronic device according to claim 2 or claim 3, wherein the protruding structure is formed by protruding from the second portion of the first cover member toward the second cover member, and
wherein the first cover member includes an insulating layer coated on at least a portion of the area other than the protruding structure.

5. The electronic device according to any one of claims 2 to 4, wherein the protruding structure is formed along the periphery of the second opening.

6. The electronic device according to claim 5, wherein the protruding structure includes a first protruding structure (271a) and at least one second protruding structure (271b) disposed outside the first protruding structure.

7. The electronic device according to any one of claims 2 to 6, wherein the second cover member includes a first recess (241), a second recess (242) located below the first recess, and a seating portion (243) partitioning the first recess from the second recess, the seating portion having a third opening (OP3) formed therein at least partially corresponding to the second opening, and
wherein at least a portion of the second portion of the first cover member is accommodated in the second recess, and
wherein the protruding structure is disposed between the seating portion and the second portion of the first cover member.

8. The electronic device according to claim 7, wherein the size of the second recess is larger than the size of the first recess.

9. The electronic device according to claim 7 or 8, further comprising a camera window (250) accommodated in the first recess of the second cover member and adhered to the seating portion.

10. The electronic device according to any one of claims 7 to 9, wherein the outermost lens adjacent to the cover housing among the lenses is disposed in at least one of the second opening and the third opening.

11. The electronic device according to any one of claims 1 to 10, wherein the first portion of the first cover member is disposed between the printed circuit board and the cover housing and adhered to a first surface (220a) of the cover housing, and
wherein the second cover member faces a second surface (220b) of the cover housing exposed to the outside of the electronic device.

12. The electronic device according to any one of claims 1 to 11, wherein at least a portion of the lens assembly is accommodated in the second opening of the first cover member.

13. The electronic device according to claim 9, wherein the size of the second cover member is larger than the size of the second portion of the first cover member when viewed from above the cover housing.

14. The electronic device according to any one of claims 1 to 13, further comprising a conductive tape (272) disposed between the second portion of the first cover member and the second cover member, the conductive tape including a conductive material and disposed along the periphery of the second opening.

15. An electronic device (100) comprising:
a housing (110 or 120);
a camera module (210) disposed in the housing and including a lens assembly (211), the lens assembly including at least one lens (212);
a cover housing (320) forming at least a portion of the exterior of the electronic device, the cover housing including a first opening (OP'1) corresponding to at least a portion of the lens assembly;
a first cover member (330) comprising a first portion (330a) at least partially facing the cover housing, a second portion (330b) extending from the first portion and at least partially protruding through the first opening, and a second opening (OP'2) formed in the second portion; and
a second cover member (340) comprising a third opening (OP'3) corresponding to the second opening, wherein the second cover member is disposed in the second portion of the first cover member; and
a support member (400) disposed between the first cover member and the second cover member, the support member comprising a fourth opening (OP'4) at least partially corresponding to the second opening and accommodating at least a portion of the lens assembly, wherein the support member is configured to be at least partially covered by the second cover member.
